# EUROPÄISCHE PATENTSCHRIFT

(11) **EP 2 463 080 B1**
(45) Veröffentlichungstag und Bekanntmachung des Hinweises auf die Patenterteilung: **16.09.2015**
(21) Anmeldenummer: 11009772.2
(22) Anmeldetag: 12.12.2011
(51) Int. Cl.: B29C 65/34, B29C 65/36, F16L 47/03

(54) **Heizelement und Verfahren zum Verschweißen von rohrförmigen Kunststoffbauteilen mit einem Heizelement sowie System aus rohrförmigen Bauteilen und Heizelement**
Heating element, method for welding tubular plastic components with a heating element and system comprising tubular components and heating element
Elément de chauffage, procédé de soudage de composants en matière synthétique tubulaires avec un élément de chauffage et système constitué de composants tubulaires et d'un élément de chauffage

(30) Priorität: 13.12.2010 DE 102010054383
(43) Veröffentlichungstag der Anmeldung: 13.06.2012
(73) Patentinhaber: Friatec Aktiengesellschaft, 68229 Mannheim (DE)
(72) Erfinder: Maier, Fabian, 67368 Westheim (DE)
(74) Vertreter: Angerhausen, Christoph

(56) Entgegenhaltungen:
- EP-A1- 0 467 309
- DE-A1- 1 479 231
- JP-A- 11 082 856
- JP-A- 2005 214 251

## Beschreibung

Die vorliegende Erfindung betrifft ein Heizelement für das Verschweißen von rohrförmigen Kunststoffbauteilen, weiterhin ein Verfahren zum Verschweißen von rohrförmigen Kunststoffbauteilen, bei dem ein Heizelement verwendet wird, sowie ein System aus rohrförmigen Bauteilen und Heizelement. Ein Heizelement mit den Merkmalen des Oberbegriffs von Anspruch 1 ist aus der EP 0 467 309 A1 bekannt.

"Rohrförmige Bauteile" bzw. "rohrförmige Kunststoffbauteile" meint dabei massive oder hohle Bauteile mit rundem oder unrundem Querschnitt, insbesondere Rohre, Stangen, Fittings, Muffe, Überschieber und dergleichen, aber auch sattelartige Bauteile und Halbschalen-Bauteile, deren Querschnitt einen Teilkreis umfasst, oder Verbund-Strangmaterial, wie kunststoffummantelte Strom- oder Glasfaserkabel.

In der Heizwendelschweißtechnik sind Fittings im Einsatz, welche entsprechend dem jeweiligen zu verbindenden Bauteil ausgewählt werden. Beim Heizwendelschweißen ist nur ein geringer Fügespalt überbrückbar, daher muss der Innendurchmesser des Fitting auf den Außendurchmesser des zu verbindenden Bauteils, beispielsweise eines Rohres, abgestimmt werden. Dabei gelingt die Schweißverbindung um so besser, je kleiner der Fügespalt ist.

Das Erfordernis des geringen Fügespaltes für die Verbindungstechnik führt bei Anwendungen, bei der eine Schweißzone mit einem Rohr oder einem anderen Bauteil überfahren werden muss, zu Problemen. Zum Einen kann die Schweißzone durch das Überfahren beschädigt werden. Des Weiteren besteht die Gefahr, dass in die Schweißzone Schmutz eingetragen wird, was zu einer schadhaften Verbindung führen kann. Auch sind die Montagekräfte für das Überfahren einer Schweißzone mit geringem Fügespalt aufgrund des praktisch nicht vorhandenen Passungsspiels nicht unerheblich, dies um so mehr, wenn Deformationen und Ovalitäten am Rohrstrang zu finden sind.

Montagesysteme, bei denen eine Verbindungsstelle oder Schweißzone überfahren werden muss, kommen zum Beispiel bei der Verlegung von Rohr-in-Rohr-Systemen in vorhandener Infrastruktur, wie Gas-, Wasser- und Abwasserrohren zum Einsatz. Hier ist es erforderlich, das Innenrohr über einen Verbindungsbereich bzw. die Schweißzone in einer Ein- oder Ausschleusungsstelle anzufahren.

Bei der nachträglichen Einbindung von Einbauteilen und bei Reparaturen werden sogenannte Überschieber benötigt. Hier wird zunächst der Überschieber komplett auf eine Rohrseite geschoben und nach erfolgter Einpassung in den Rohrstrang zurück über die Schweißzone geschoben und geschweißt.

Die DE 1 479 231 A beschreibt ein Verfahren, bei dem ein Heizdraht um ein Kabel gewickelt wird. Die JP 2005-214251 A zeigt ein selbsttragendes Heizelement das zusammen mit einer Hülse eingesetzt wird.

Der Erfindung liegt die Aufgabe zugrunde, Mittel zur Verfügung zu stellen, die oben angesprochenen Probleme zumindest mildern und insbesondere das Überfahren einer Verbindungsstelle vereinfachen.

Diese Aufgabe wird mit einem Heizelement nach Anspruch 1 gelöst. Ein Verfahren zum Verschweißen von rohrförmigen Kunststoffbauteilen, bei dem ein derartiges Heizelement eingesetzt wird, ist Gegenstand des Anspruchs 9. Anspruch 10 definiert ein System, das aus einem ersten rohrförmigen Kunststoffbauteil, einem zweiten rohrförmigen Kunststoffbauteil und einem Heizelement besteht.

Das Heizelement gemäß der vorliegenden Erfindung, das für das Verschweißen von rohrförmigen Kunststoffbauteilen verwendet werden soll und wie es im Anspruch 1 definiert ist, umfasst mindestens einen Heizdraht, der in Wendeln gewickelt ist, wobei die Wendel zumindest teilweise unverbunden sind, wobei der mindestens eine Heizdraht aus einem federelastischen Material besteht, so dass sich unter Wirkung der Rückstellkräfte des federelastischen Materials ein im Wesentlichen hohlzylindrischer Körper mit einem ersten Ende und einem zweiten Ende ergibt, bei dem die Wendel aneinander liegen. Dabei ist das Material so gewählt, dass der im Wesentlichen hohlzylindrische Körper axial aufweitbar ist und dass die Wendel radial aufweitbar sind.

"Unverbunden" meint dabei, dass benachbart liegende Wendel nicht direkt oder indirekt aneinander befestigt sind. Für die Erfindung brauchen nicht alle Wendel unverbunden zu sein, so sind beispielsweise bei einem bifilar geführten Heizdraht zwei Leitungen verbunden, so dass sich auch entsprechend Wendel ergeben, die im Heizelement verbunden sind.

Das erfindungsgemäße Heizelement kann an einer beliebigen Stelle auf ein rohrförmiges Kunststoffbauteil gesetzt werden. Damit wird es möglich, Schweißungen auf "endlosen" Rohren durchzuführen, beispielsweise auf Glasfaserkabeln, die eine Kunststoffaußenschicht aufweisen, wobei als Gegenstück ein Halbschalen- oder Sattelbauteil verwendet wird. Aufgrund der federelastischen Rückstellkräfte liegt das Heizelement überdies unabhängig vom Außendurchmesser passgenau auf der Außenfläche des rohrförmigen Bauteils an, es ändert sich lediglich die Länge der Schweißzone, d. h. je größer der Durchmesser des rohrförmigen Kunststoffbauteils ist, desto kürzer ist die Schweißzone. Dabei bleiben die Schweißparameter für das Heizelement bestehen. Da das Heizelement erst nachträglich positioniert wird, bleibt bei entsprechend angepassten rohrförmigen Kunststoffbauteilen zunächst ein ausreichend großer Spalt zwischen diesen, so dass die Verbindungsstelle bzw. Schweißzone leicht überfahren werden kann, was sich auf die Montagefreundlichkeit auswirkt. Auch die Vorbereitung der Schweißzone wird erheblich vereinfacht, da das Heizelement erst nach der Vorbereitung, wie Reinigen und Schälen der Verbindungsstelle, eingesetzt werden muss.

Das federelastische Material kann dabei ein induktiv heizbares Material sein.

Als Alternative kann der mindestens eine Heizdraht an zumindest einen Kontaktanschluss geführt sein, der mit elektrischer Energie beaufschlagbar ist.

Dabei kann vorgesehen sein, dass der mindestens eine Heizdraht eine umhüllende elektrische Isolation aufweist.

Besonders vorteilhaft ist, wenn der mindestens eine Heizdraht bifilar geführt ist. Dann nämlich kann das Heizelement so gestaltet werden, dass eines, das erste oder das zweite Ende des im Wesentlichen hohlzylindrischen Körpers Kontaktanschlüsse aufweist, während das andere Ende von Kontaktanschlüssen frei ist. Durch die bifilare Führung des Heizdrahtes werden somit zwei Leiterbahnen parallel geführt, so dass die Kontaktierung auf einer Seite des Heizelementes erfolgen kann. Grundsätzlich ist aber eine Kontaktierung des Heizelementes an jedem Ende des im Wesentlichen hohlzylindrischen Körpers möglich, wenn dies auch nicht immer zweckmäßig oder vorteilhaft ist.

Weiter vorteilhaft ist der mindestens eine Kontaktanschluss als Kontaktauge ausgebildet, das im Allgemeinen radial vom Heizelement hervorsteht und verwendet werden kann, um die Position des Heizelementes in Bezug auf eines der rohrförmigen Kunststoffbauteile besser als bei einem einfachen, gegebenenfalls sogar nachgebenden Kontaktanschluss zu definieren.

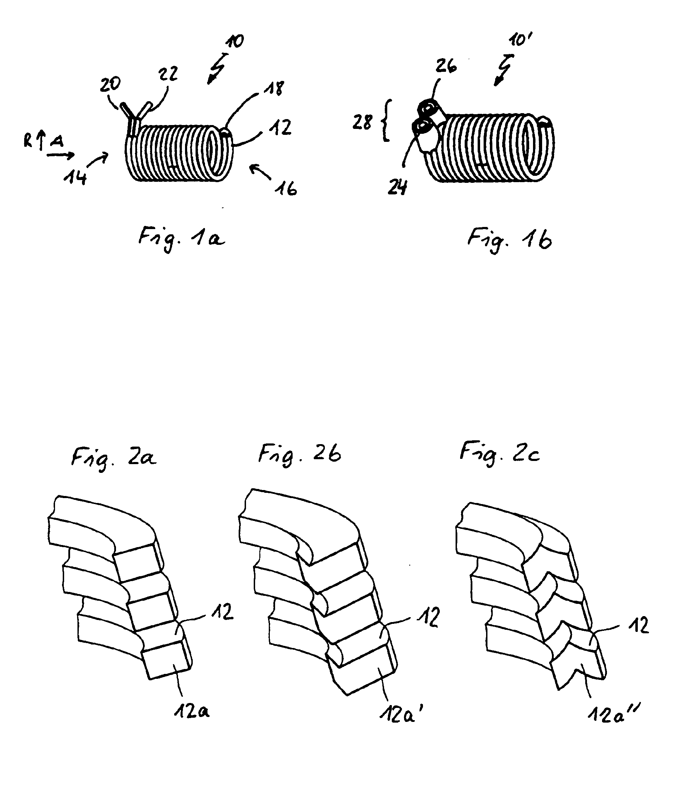

Durch die Ausgestaltung des Profils des Heizdrahtes kann das Betriebsverhalten des Heizelements insoweit eingestellt werden, dass seine elastischen Eigenschaften beeinflusst werden. Durch Auswahl des Profils kann insbesondere die Gefahr des Aufwerfens der Wendel beim Positionieren verringert werden. So ist nach einer bevorzugten Ausführungsform vorgesehen, dass der Querschnitt des Heizdrahtes so gewählt ist, dass übereinander liegende Wendel des Heizdrahtes im rückgestellten Zustand ineinander greifen, um eine radiale Verlagerung zu verhindern. "Querschnitt des Heizdrahtes" bedeutet dabei die Schnittebene senkrecht zur Achse des abgerollten Heizdrahtes, wie es im Zusammenhang mit Figur 2a, 2b und 2c veranschaulicht wird.

Ein Verfahren zum Verschweißen von rohrförmigen Kunststoffbauteilen, wie eingangs definiert, gemäß der vorliegenden Erfindung weist daher folgende Schritte auf, die nicht notwendigerweise in der angegebenen Reihenfolge ausgeführt werden müssen:
- Bereitstellen eines Heizelementes nach einem der Ansprüche 1 bis 8;
- Bereitstellen eines ersten rohrförmigen Kunststoffbauteils;
- Bereitstellen eines zweiten rohrförmigen Kunststoffbauteils, wobei die Differenz zwischen dem Innenradius des zweiten rohrförmigen Kunststoffbauteils und dem Außenradius des ersten rohrförmigen Kunststoffbauteils zumindest in einem zu verschweißenden Bereich größer als der Durchmesser des Heizdrahtes ist, diesem aber im Wesentlichen entspricht;
- Aufschieben des zweiten rohrförmigen Kunststoffbauteiles auf das erste rohrförmige Kunststoffbauteil;
- Auffädeln des Heizelementes auf das erste rohrförmige Kunststoffbauteil;
- Anordnen des Heizelementes auf dem zu verschweißenden Bereich;
- Verlagern des ersten oder des zweiten rohrförmigen Kunststoffbauteiles, so dass das zweite rohrförmige Kunststoffbauteil über dem Heizelement zu liegen kommt;
- Beaufschlagen des Heizelementes mit Energie, so dass das erste rohrförmige Kunststoffbauteil und das zweite rohrförmige Kunststoffbauteil über das Heizelement verschweißt werden.

Ein erfindungsgemäßes System besteht dabei aus einem ersten rohrförmigen Kunststoffbauteil, einem zweiten rohrförmigen Kunststoffbauteil und einem Heizelement nach einem der Ansprüche 1 bis 8, wobei die Differenz zwischen Innenradius des zweiten rohrförmigen Kunststoffbauteils und Außenradius des ersten rohrförmigen Kunststoffbauteils zumindest in einem zu verschweißenden Bereich größer als der Durchmesser des Heizdrahtes ist, diesem aber im Wesentlichen entspricht.

Vorteilhaft weist dabei das erste rohrförmige Kunststoffbauteil ein Positionierelement auf, welches die Lage des Heizelementes auf dem ersten rohrförmigen Kunststoffbauteil definiert.

Nach einer bevorzugten Ausführungsform des Systems weist das zweite rohrförmige Kunststoffbauteil einen Schweißindikator auf.

Dabei ist es weiter vorteilhaft, dass das zweite rohrförmige Kunststoffbauteil eine Aufnahme für den Kontaktanschluss bzw. die Kontaktanschlüsse aufweist, wobei dann vorteilhaft der Schweißindikator nahe der Aufnahme angeordnet ist, so dass er für den Schweißer, der auf die Kontaktanschlüsse zugreift, sichtbar ist.

Im Folgenden soll die Erfindung lediglich beispielhaft anhand der beigefügten Zeichnungen näher erläutert werden. Dabei zeigt:
- Figur 1a: ein Heizelement gemäß einer ersten Ausführungsform der vorliegenden Erfindung;
- Figur 1b: ein Heizelement gemäß einer zweiten Ausführungsform der vorliegenden Erfindung;
- Figuren 2a, 2b, 2c: Beispiele für Querschnittsformen des Heizdrahtes;
- Figur 3: ein erstes rohrförmiges Kunststoffbauteil und ein zweites rohrförmiges Kunststoffbauteil, deren Bemaßungen so angepasst sind, dass ein Heizelement gemäß der vorliegenden Erfindung für das Verschweißen eingesetzt werden kann;
- Figur 4a: das Auffädeln eines Heizelementes gemäß der vorliegenden Erfindung auf ein rohrförmiges Bauteil mit einem ersten Durchmesser;
- Figur 4b: das Auffädeln eines Heizelementes gemäß der vorliegenden Erfindung auf ein rohrförmiges Kunststoffbauteil mit einem zweiten Durchmesser;
- Figur 5a: eine Ansicht entsprechend der Figur 4a mit vollständig aufgefädeltem Heizelement;
- Figur 5b: eine Ansicht entsprechend der Figur 4b mit vollständig aufgefädeltem Heizelement;
- Figur 6a: das zur Verschweißung vorbereitete System gemäß Figur 5a;
- Figur 6b: das zur Verschweißung vorbereitete System gemäß Figur 5b;
- Figur 7a: das System aus Figur 6a im Längsschnitt;
- Figur 7b: das System aus Figur 6b im Längsschnitt;
- Figur 8a: eine schematische Darstellung einer Einschleusungs- bzw. Ausschleusungsstelle für ein Rohr-in-Rohr-System, bei dem das Heizelement gemäß Figur 1 verwendet wird, um ein Anschlussrohr mit einem ersten Durchmesser anzubinden;
- Figur 8b: eine schematische Darstellung einer Einschleusungs- bzw. Ausschleusungsstelle für ein Rohr-in-Rohr-System, bei dem das Heizelement gemäß Figur 1 verwendet wird, um ein Anschlussrohr mit einem zweiten Durchmesser anzubinden;
- Figur 9a: eine schematische Darstellung entsprechend der Figur 8a, wobei das Anschlussrohr mitsamt dem Heizelement eingeschoben ist;
- Figur 9b: eine schematische Darstellung entsprechend der Figur 8b, wobei das Anschlussrohr mitsamt dem Heizelement eingeschoben ist;
- Figur 10a: ein Ausführungsbeispiel eines Systems mit einem Heizelement gemäß Figur 2, bei dem ein Schweißindikator vorgesehen ist;
- Figur 10b: eine Draufsicht auf das System gemäß Figur 10a, wobei das Anschlussrohr mitsamt dem Heizelement positioniert ist.

Figur 1a zeigt ein Heizelement 10 gemäß einer ersten Ausführungsform der vorliegenden Erfindung. Das Heizelement 10 umfasst einen bifilar geführten Heizdraht 12, der in Wendeln gewickelt ist, so dass ein im Wesentlichen hohlzylindrischer Körper mit einem ersten Ende 14 und einem zweiten Ende 16 gebildet wird. Der Heizdraht 12 besteht aus einem federelastischen Material, z.B. Federstahl, so dass das Heizelement 10 sowohl in axialer Richtung A als auch in radialer Richtung R aufgeweitet werden kann, wie es weiter unten noch genauer beschrieben ist, wobei die Rückstellkräfte des federelastischen Materials so wirken, dass sie das Heizelement 10 im Wesentlichen wieder zu einem hohlzylindrischen Körper zurückführen. Am ersten Ende 14 sind die Enden des bifilar geführten Heizdrahtes 12 zu Kontaktanschlüssen 20, 22 geführt, die im Wesentlichen radial von der Oberfläche des hohlzylindrischen Körpers hervorstehen. Das zweite Ende 16 ist daher kontaktanschlussfrei und enthält lediglich die Verbindung 18 des bifilar geführten Heizdrahtes 12. Der Heizdraht 12 ist mit einer ihm umhüllenden elektrischen Isolierung versehen, die vorteilhaft aus schmelzbarem Material, wie Polyethylen, besteht, so dass nicht nur, um die Kurzschlussgefahr zu reduzieren, die Wendel auf Abstand gehalten werden, sondern gleichzeitig zusätzliches Schmelzmaterial in die Schweißzone gebracht wird.

Figur 1b zeigt ein Heizelement 10' gemäß einer zweiten Ausführungsform der vorliegenden Erfindung, das sich von dem Heizelement 10 der Figur 1a lediglich dadurch unterscheidet, dass anstelle der Kontaktanschlüsse 20, 22 Kontaktaugen 24, 26 vorgesehen sind, die mechanisch stabil zu einem Kontaktaugenblock 28 zusammengefasst sind.

Das Heizelement kann in seiner Form und in seinen Eigenschaften optimiert werden.

Figur 2a zeigt schematischer Weise drei übereinander liegende Wendel des Heizdrahtes 12 eines erfindungsgemäßen Heizelements, wobei bei dieser Ausgestaltung die Querschnittsfläche 12a rechteckig und über die axiale Länge des Heizelements konstant ist. Der Fachmann erkennt, dass bei einer derartigen Ausgestaltung eine Verschiebung der Wendel des Heizdrahtes 12 gegeneinander möglich ist. Dies ist im Übrigen auch bei einem kreisförmigen oder ovalen Querschnitt des Heizstranges 12 - hier nicht dargestellt - der Fall. Es kann aber zweckmäßig sein, wie in der Figur 2b dargestellt, die Querschnittsfläche 12a' unregelmäßig zu gestalten, beispielsweise in Form eines liegenden "J", so dass in einem rückgestellten Zustand des Heizelementes die Wendel des Heizdrahtes 12 ineinander greifen. Eine weitere Ausgestaltung zeigt die Figur 2c mit einem Heizdraht 12, der mit einer Querschnittsfläche 12a" in Form eines auf dem Kopf stehenden "V" gestaltet ist. Andere Querschnittsflächen sind möglich. Die Wendel können dann ineinander greifen und so die Gefahr des Aufwerfens der Wendel beim Positionieren verringern.

Durch das den Heizdraht 12 umgebende Kunststoffmaterial, das in den Zeichnungsfiguren nicht gesondert dargestellt ist, wird eine elastische Komponente eingebracht, deren Eigenschaften nicht durch die gewählte Querschnittsfläche, wie beispielsweise 12a, 12a', 12a" beeinflusst ist. In Kombination mit beispielsweise einem Federstahl als Material für den Heizdraht 12 ist die Flexibilität des Heizelementes, d.h. sind seine elastischen Eigenschaften, in weiten Bereichen einstellbar.

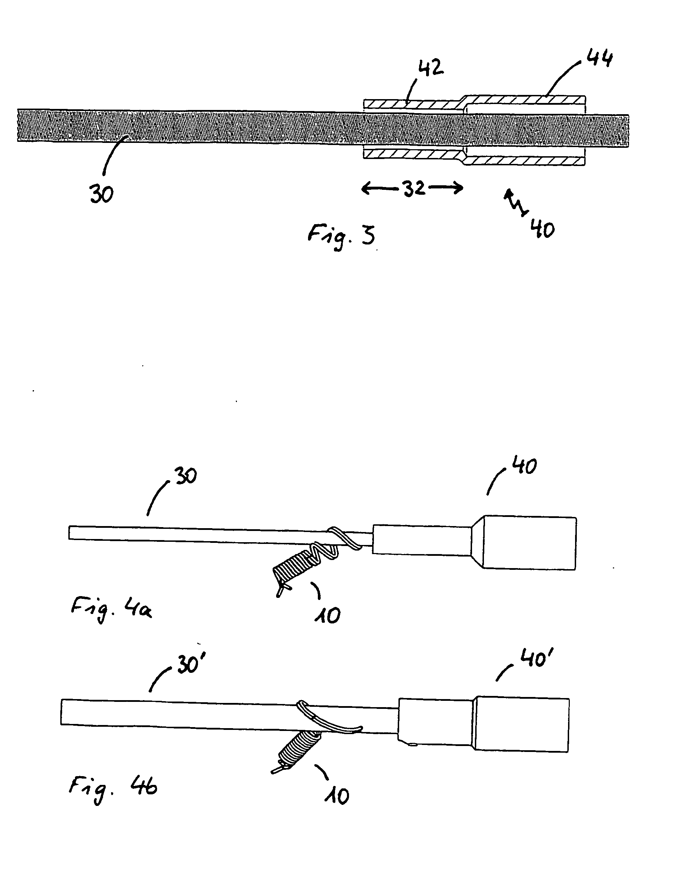

Figur 3 zeigt ein erstes rohrförmiges Kunststoffbauteil 30 und ein zweites rohrförmiges Kunststoffbauteil 40, das nach Art eines Überschiebers auf das erste rohrförmige Kunststoffbauteil 30 geschoben ist. Das erste rohrförmige Kunststoffbauteil 30 und das zweite rohrförmige Kunststoffbauteil 40 sollen in der Schweißzone 32 miteinander verschweißt werden. Um die Verschweißung erfolgreich ausführen zu können, sind der Außenradius des ersten rohrförmigen Kunststoffbauteils 30 und der Innenradius des zweiten rohrförmigen Kunststoffbauteils 40 so abgestimmt, dass die Differenz zwischen dem Innenradius des zweiten rohrförmigen Kunststoffbauteils 40 und dem Außenradius des ersten rohrförmigen Kunststoffbauteils 30 in der Schweißzone 32 im Wesentlichen dem Durchmesser des Heizdrahtes 12 eines Heizelementes 10, 10' gemäß Figur 1 bzw. 2 entspricht. Während also beispielsweise das rohrförmige Kunststoffbauteil 30 über seine Länge einen gleichförmigen Durchmesser aufweist, hat das zweite rohrförmige Kunststoffbauteil 40 einen ersten Bereich 42 mit entsprechend angepasstem Radius und einen zweiten Bereich 44 mit einem größeren Innenradius, wobei der zweite Bereich 44 für die Verschweißung nicht benötigt wird. Im Bereich der Schweißzone 32 steht überdies ein ausreichend großer Montagespalt zur Verfügung.

Mit einem Heizelement 10, 10' gemäß Figur 1 oder Figur 2 können verschiedene Rohmennweiten verarbeitet werden. Dies ist in den Figuren 4a und 4b veranschaulicht.

Figur 4a zeigt ein System aus einem ersten rohrförmigen Kunststoffbauteil 30 und einem zweiten rohrförmigen Kunststoffbauteil 40, das auf das erste rohrförmige Kunststoffbauteil 30 aufgeschoben ist. Zur Vorbereitung des Verschweißens wird nun beispielsweise ein Heizelement 10 gemäß Figur 1 an einer beliebigen Stelle auf das erste rohrförmige Kunststoffbauteil 30, beginnend an seinem offenen Ende der Verbindung 18, aufgefädelt. Da die Wendel des bifilar geführten Heizdrahtes 12 teilweise unverbunden sind, so dass das Heizelement 10 sozusagen "durchgängig" ist, kann das Heizelement 10 spiralig um das rohrförmige Kunststoffbauteil 30 gelegt werden.

Figur 4b zeigt dieselbe Situation, wenn ein rohrförmiges Kunststoffbauteil 30' mit einem größeren Außenradius gewählt wird. Die Wendel des Heizdrahtes 12 müssen sich stärker aufweiten, damit sich das Heizelement 10 wiederum auf das rohrförmige Bauteil 30' auffädeln lässt. Das zweite rohrförmige Kunststoffbauteil 40' kann ebenso wie bei der Ausführungsform nach Figur 4a, vor dem Auffädeln des Heizelementes 10 oder nach dem Auffädeln des Heizelementes 10 auf das jeweilige rohrförmige Kunststoffbauteil 30, 30' aufgeschoben werden.

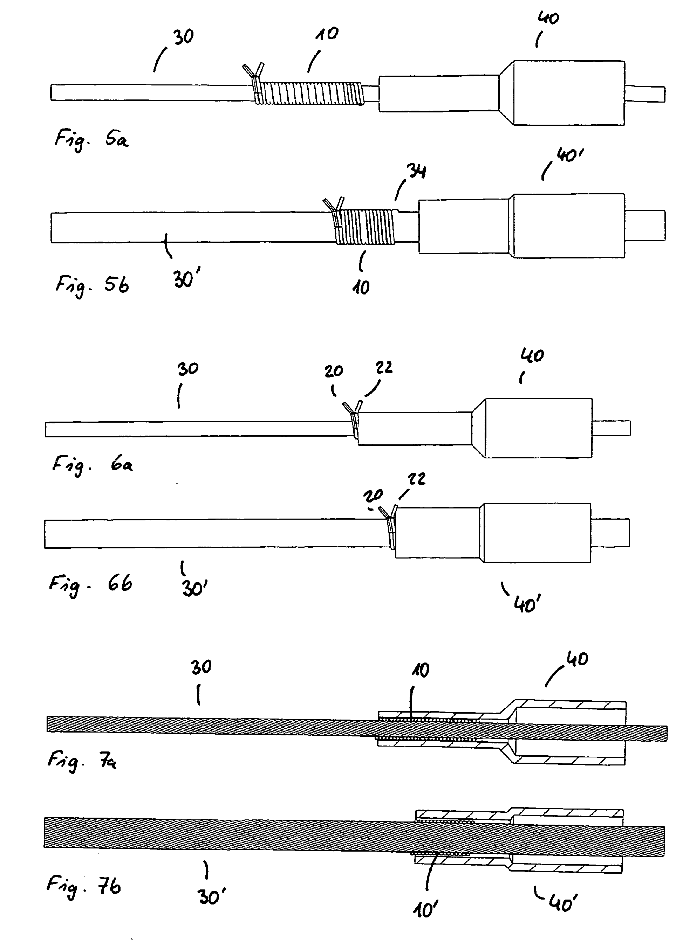

Die Figuren 5a und 5b zeigen das jeweils vollständig auf das erste rohrförmige Kunststoffbauteil 30 bzw. 30' aufgefädelte Heizelement 10. Aufgrund der Rückstellkräfte des elastischen Materials, aus dem das Heizelement 10 aufgebaut ist, liegt dieses jeweils an der Außenfläche des ersten rohrförmigen Kunststoffbauteils 30 bzw. 30'. Es ist lediglich bei größeren Außenradien die Schweißzone, die durch das Heizelement 10 definiert ist, verkürzt. Die Schweißparameter für das Heizelement 10 bleiben erhalten. Das erste rohrförmige Kunststoffbauteil 30' kann ein Positionierelement 34 für das Heizelement 10 aufweisen, welches die Lage des Heizelementes 10 auf dem ersten rohrförmigen Kunststoffbauteil, hier für das Bauteil 30' gezeigt, definiert. Das zweite rohrförmige Kunststoffbauteil 40' kann eine entsprechende Anschlagfläche, in der Figur 5b nicht dargestellt, auf seiner Innenfläche enthalten, die von der entgegengesetzten Seite her an dem Positionierelement 34 zur Anlage kommen kann. Damit sind die relative Lage des ersten rohrförmigen Kunststoffbauteils 30' in Bezug auf das Heizelement 10 und in Bezug auf das zweite rohrförmige Kunststoffbauteil 40' definiert. Falls ein solches Positionierelement 34 fehlt, beispielsweise wie in der Ausführungsform der Figur 5a, können die Kontaktanschlüsse 20, 22 als Positionierhilfe dienen, da sie den

Überschiebeweg des zweiten rohrförmigen Kunststoffbauteils 40 begrenzen, wie es aus der Figur 6a und der Figur 6b ersichtlich ist, die das zur Verschweißung vorbereitete System gemäß Figur 5a bzw. Figur 5b zeigen, wobei das zweite rohrförmige Kunststoffbauteil 40 bzw. 40' bis an die Kontaktanschlüsse 20, 22 über das Heizelement 10 geschoben ist.

Die Figuren 7a und 7b zeigen das System jeweils im Längsschnitt, wobei deutlich erkennbar ist, dass das Heizelement 10 jeweils an der Oberfläche des ersten rohrförmigen Kunststoffbauteils 30 bzw. 30' anliegt, so dass bei übergeschobenen zweiten rohrförmigen Kunststoffbauteil 40 bzw. 40' die Verschweißung vorgenommen werden kann.

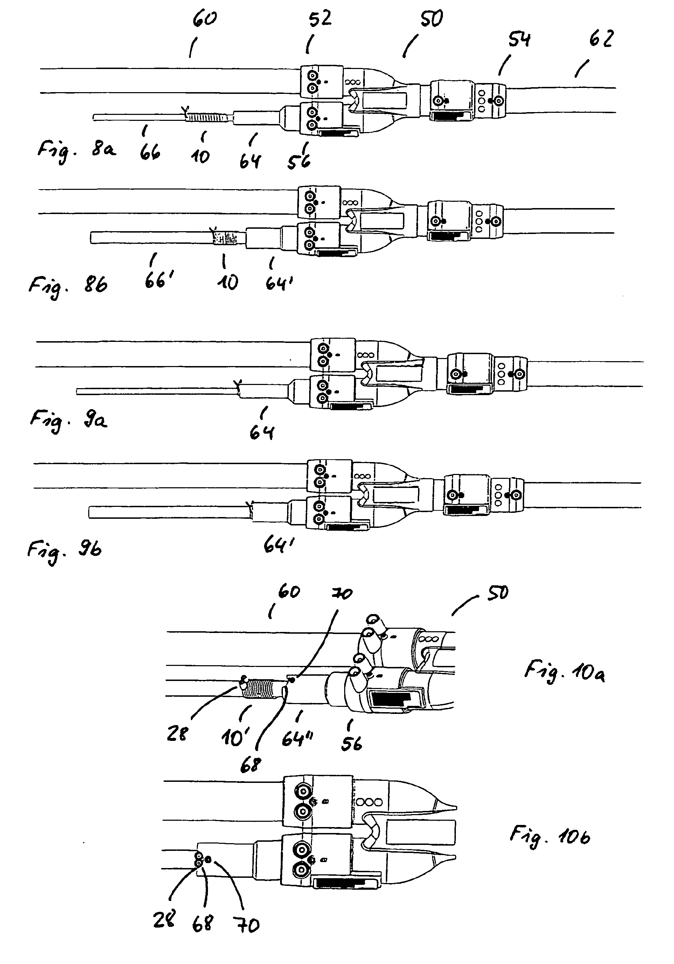

Figur 8a zeigt eine schematische Darstellung einer Einschleusungs- bzw. Ausschleusungsstelle für ein Rohr-in-Rohr-System, bei dem das Heizelement gemäß Figur 1 verwendet wird, um ein Anschlussrohr 66 mit einem ersten Durchmesser anzubinden. Das System weist einen Y-Verbinder 50 auf, an das, beispielsweise mittels der Heizwendelschweißtechnik, an den Verbindungsstellen 52, 54 jeweils Rohre 60, 62 angeschlossen sind. An der Verbindungsstelle 56 ist ein Überschieber 64 angeschlossen, der dem zweiten rohrförmigen Kunststoffbauteil 40, 40' der Figuren 4a bis 7a bzw. 4b bis 7b entspricht. Entsprechend der Figur 5a ist nun bereits ein Heizelement 10 auf ein anzuschließendes Rohr 66 mit einem relativ geringen Außenradius vorbereitet. Die gleiche bauliche Situation mit einem Rohr 66' mit einem größeren Außenradius als in Figur 8b dargestellt. Die Rohre 66, 66' mit ihrem darauf befindliche Heizelement 10 werden nun in den jeweiligen Überschieber 64, 64' geschoben, in den Figuren 9a und 9b gezeigt, so dass die Verschweißung vorgenommen werden kann. Die Einschleusungs- bzw. Ausschleusungsstelle ist damit fertig gestellt.

Figur 10a zeigt ein Ausführungsbeispiel eines Systems mit einem Heizelement 10' gemäß Figur 2 in perspektivischer Darstellung, wobei an den Y-Verbinder 50, in der Figur 10a nicht vollständig dargestellt, bereits Rohre, z. B. das Rohr 60, ähnlich wie in Figur 8a oder 8b, angeschlossen ist. Bei dieser Ausführungsform wird an der Verbindungsstelle 56 ein Überschieber 64" verwendet, der an seinem freien Ende eine Aussparung 68 aufweist, die den Kontaktblock 28 des Heizelementes 10' aufnehmen soll. In unmittelbarer Nähe der Aussparung 68 ist ein Schweißindikator 70 angeordnet, der sich damit, bei eingeschobenem Heizelement 10', unmittelbar über diesem findet, so dass, wenn der Kontaktblock 28 mit elektrischer Energie beaufschlagt wird und der Schweißvorgang läuft, der Schweißindikator 70 jederzeit vom Schweißer zu sehen ist.

Figur 10b zeigt eine Draufsicht auf das System gemäß Figur 10a der endgültigen Positionierung des Rohres samt dem Heizelement 10' in dem Überschieber 64'.

## Patentansprüche

1. Heizelement (10, 10') für das Verschweißen von rohrförmigen Kunststoffbauteilen, bestehend aus
- einem Heizdraht (12), der in Wendeln gewickelt ist, wobei die Wendel zumindest teilweise unverbunden sind, wobei der mindestens eine Heizdraht (12) aus einem federelastischen Material besteht, **dadurch gekennzeichnet, dass** sich unter Wirkung der Rückstellkräfte des federelastischen Materials ein im Wesentlichen hohlzylindrischer Körper mit einem ersten Ende (14) und einem zweiten Ende (16) ergibt, bei dem die Wendel aneinander liegen, wobei das Material so gewählt ist, dass der im Wesentlichen hohlzylindrische Körper axial aufweitbar ist und dass die Wendel radial aufweitbar sind, so dass bei größerem Außenradius die axiale Länge des hohlzylindrischen Körpers verkürzt ist.

2. Heizelement (10, 10') nach Anspruch 1, **dadurch gekennzeichnet, dass** das federelastische Material ein induktiv heizbares Material ist.

3. Heizelement (10, 10') nach Anspruch 1, **dadurch gekennzeichnet, dass** der mindestens eine Heizdraht (12) an zumindest einen Kontaktanschluss (20, 22) geführt ist, der mit elektrischer Energie beaufschlagbar ist.

4. Heizelement (10, 10') nach Anspruch 1, **dadurch gekennzeichnet, dass** der mindestens eine Heizdraht (12) eine umhüllende elektrische Isolation aufweist.

5. Heizelement (10, 10') nach Anspruch 1, **dadurch gekennzeichnet, dass** der mindestens eine Heizdraht (12) bifilar geführt ist.

6. Heizelement (10, 10') nach Anspruch 5, **dadurch gekennzeichnet, dass** eines, das erste (14) oder das zweite (16) Ende des im Wesentlichen hohlzylindrischen Körpers Kontaktanschlüsse (20, 22) aufweist, während das andere Ende von Kontaktanschlüssen frei ist.

7. Heizelement (10, 10') nach Anspruch 3, **dadurch gekennzeichnet, dass** der mindestens eine Kontaktanschluss als Kontaktauge (24, 26) ausgebildet ist.

8. Heizelement (10, 10') nach Anspruch 1, **dadurch gekennzeichnet, dass** die Querschnittsfläche (12a', 12") des Heizdrahtes (12) so gewählt ist, dass im rückgestellten Zustand übereinander liegende Wendel ineinander greifen.

9. Verfahren zum Verschweißen von rohrförmigen Kunststoffbauteilen, mit den Schritten:
- Bereitstellen eines Heizelementes (10, 10') nach einem der Ansprüche 1 bis 8;
- Bereitstellen eines ersten rohrförmigen Kunststoffbauteils (30, 30'; 66, 66');
- Bereitstellen eines zweiten rohrförmigen Kunststoffbauteils (40, 40'; 64, 64', 64"), wobei die Differenz zwischen dem Innenradius des zweiten rohrförmigen Kunststoffbauteils (40, 40'; 64, 64', 64'') und Außenradius des ersten rohrförmigen Kunststoffbauteils zumindest in einem zu verschweißenden Beriech (32) größer ist als der Durchmesser des Heizdrahtes (12), diesem aber im Wesentlichen entspricht;
- Aufschieben des zweiten rohrförmigen Kunststoffbauteils (40, 40'; 64, 64', 64") auf das erste rohrförmige Kunststoffbauteil (30, 30'; 66, 66');
- Auffädeln des Heizelementes (10, 10) auf das erste rohrförmige Kunststoffbauteil (30, 30'; 66, 66');
- Anordnen des Heizelementes (10, 10') auf dem zu verschweißenden Bereich (32);
- Verlagern des ersten oder des zweiten rohrförmigen Kunststoffbauteils (40, 40'; 64, 64', 64"), so dass das zweite rohrförmige Kunststoffbauteil (40, 40'; 64, 64', 64"), über dem Heizelement (10, 10') zu liegen kommt;
- Beaufschlagen des Heizelementes (10, 10') mit Energie, so dass das erste rohrförmige Kunststoffbauteil (30, 30'; 66, 66') und das zweite rohrförmige Kunststoffbauteil (40, 40'; 64, 64', 64") über das Heizelement (10, 10') verschweist werden.

10. System, bestehend aus einem ersten rohrförmigen Kunststoffbauteil (30, 30'; 66, 66'), einem zweiten rohrförmigen Kunststoffbauteil (40, 40'; 64, 64', 64") und einem Heizelement (10, 10') nach einem der Ansprüche 1 bis 8, wobei die Differenz zwischen Innenradius des rohrförmigen Kunststoffbauteils (40, 40'; 64, 64', 64") und Außenradius des ersten rohrförmigen Kunststoffbauteils (30, 30'; 66, 66') zumindest in einem zu verschweißenden Bereich (32) größer ist als der Durchmesser des Heizdrahtes (12), diesem aber im Wesentlichen entspricht.

11. System nach Anspruch 10, **dadurch gekennzeichnet, dass** das erste rohrförmige Kunststoffbauteil (30') ein Positionierelement (34) aufweist, welches die Lage des Heizelementes (10, 10') auf dem ersten rohrförmigen Kunststoffbauteil (30') definiert.

12. System nach Anspruch 10, **dadurch gekennzeichnet, dass** das zweite rohrförmige Kunststoffbauteil (64") ein Schweißindikator (70) aufweist.

13. System nach Anspruch 10 oder 11, **dadurch gekennzeichnet, dass** das zweite rohrförmige Kunststoffbauteil (64") eine Aufnahme (68) für den Kontaktanschluss bzw. die Kontaktanschlüsse (20, 22; 24, 26, 28) aufweist.

14. System nach Anspruch 12, soweit von Anspruch 11 abhängig, **dadurch gekennzeichnet, dass** der Schweißindikator (70) nahe der Aufnahme (68) angeordnet ist.

## Claims

1. A heating element (10, 10') for welding tubular plastic components, comprising
- a heating wire (12), which is wound in coils, wherein the coils are at least partially unattached, wherein the at least one heating wire (12) is made of a resilient material, **characterized in that**, under the effect of the restoring forces of the resilient material, an essentially hollow cylindrical body having a first end (14) and a second end (16) is formed, in which the coils abut one another, wherein the material is selected such that the essentially hollow cylindrical body is axially expandable and that the coils are radially expandable, such that in the case of a larger outer radius, the axial length of the hollow cylindrical body is shortened.

2. The heating element (10, 10') according to Claim 1, **characterized in that** the resilient material is an inductively heatable material.

3. The heating element (10, 10') according to Claim 1, **characterized in that** the at least one heating wire (12) is guided to at least one contact terminal (20, 22), which may be supplied with electrical energy.

4. The heating element (10, 10') according to Claim 1, **characterized in that** the at least one heating wire (12) has a surrounding electrical insulation.

5. The heating element (10, 10') according to Claim 1, **characterized in that** the at least one heating wire (12) is bifilar.

6. The heating element (10, 10') according to Claim 5, **characterized in that** one, the first (14) or the second (16) end of the essentially hollow cylindrical body has contact terminals (20, 22), whereas the other end is free of contact terminals.

7. The heating element (10, 10') according to Claim 3, **characterized in that** the at least one contact terminal is designed as a contact eye (24, 26).

8. The heating element (10, 10') according to Claim 1, **characterized in that** the cross-sectional surface (12a', 12") of the heating wire (12) is selected so that coils mesh when situated on top of one another in the restored state.

9. A method for welding tubular plastic components, comprising the steps:
- providing a heating element (10, 10') according to one of Claims 1 through 8;
- providing a first tubular plastic component (30, 30', 66, 66');
- providing a second tubular plastic component (40, 40'; 64, 64', 64"),
wherein the difference between the inner radius of the second tubular plastic component (40, 40'; 64, 64', 64") and the outer radius of the first tubular plastic component is, at least in an area (32) to be welded, greater than the diameter of the heating wire (12), but essentially corresponds to the latter;
- sliding the second tubular component (40, 40'; 64, 64', 64") onto the first tubular component (30, 30'; 66, 66');
- threading the heating element (10, 10) onto the first tubular plastic component (30, 30'; 66, 66');
- arranging the heating element (10, 10') on the area (32) to be welded;
- displacing the first or the second tubular plastic component (40, 40'; 64, 64', 64"), so that the second tubular plastic component (40, 40'; 64, 64', 64") is positioned above the heating element (10, 10');
- supplying the heating element (10, 10') with electrical energy, so that the first tubular plastic component (30, 30'; 66, 66') and the second tubular plastic component (40, 40'; 64, 64', 64") are welded via the heating element (10, 10').

10. A system comprising a first tubular plastic component (30, 30'; 66, 66'), a second tubular plastic component (40, 40'; 64, 64', 64") and a heating element (10, 10') according to one of Claims 1 through 8, wherein the difference between the inner radius of the tubular plastic component (40, 40'; 64, 64', 64") and the outer radius of the first tubular component (30, 30'; 66, 66') is, at least in an area (32) to be welded, greater than the diameter of the heating wire (12), but essentially corresponds to the latter.

11. The system according to Claim 10, **characterized in that** the first tubular plastic component (30') includes a positioning element (34), which defines the position of the heating element (10, 10') on the first tubular plastic component (30').

12. The system according to Claim 10, **characterized in that** the second tubular plastic component (64") includes a weld indictor (70).

13. The system according to Claim 10 or 11, **characterized in that** the second tubular plastic component (64") includes a receptor (68) for the contact terminal, respectively, contact terminals (20, 22; 24, 26, 28).

14. The system according to Claim 12, dependent inasmuch from Claim 11, **characterized in that** the weld indicator (70) is arranged near the receptor (68).

## Revendications

1. Elément chauffant (10, 10') pour le soudage de composants en matière plastique tubulaires, composé
- d'un fil chauffant (12) qui est enroulé en hélices, les hélices étant au moins partiellement non reliées, le fil chauffant (12) au moins au nombre de un étant composé d'un matériau élastique à la façon d'un ressort, **caractérisé en ce que**, sous l'action des forces de rappel du matériau élastique à la façon d'un ressort, il résulte un corps essentiellement en forme de cylindre creux avec une première extrémité (14) et une deuxième extrémité (16), avec lequel les hélices sont juxtaposées, le matériau étant choisi de telle sorte que le corps essentiellement en forme de cylindre creux peut être élargi axialement et de telle sorte que les hélices peuvent être élargies radialement de telle sorte que, en cas de rayon extérieur assez important, la longueur axiale du corps en forme de cylindre creux est réduite.

2. Elément chauffant (10, 10') selon la revendication 1, **caractérisé en ce que** le matériau élastique à la façon d'un ressort est un matériau pouvant être chauffé par induction.

3. Elément chauffant (10, 10') selon la revendication 1, **caractérisé en ce que** le fil chauffant (12) au moins au nombre de un est conduit à au moins une borne de contact (20, 22) qui peut être alimentée en énergie électrique.

4. Elément chauffant (10, 10') selon la revendication 1, **caractérisé en ce que** le fil chauffant (12) au moins au nombre de un présente une isolation électrique enveloppante.

5. Elément chauffant (10, 10') selon la revendication 1, **caractérisé en ce que** le fil chauffant (12) au moins au nombre de un est conduit de façon bifilaire.

6. Elément chauffant (10, 10') selon la revendication 5, **caractérisé en ce que** la première extrémité (14) ou la deuxième extrémité (16) du corps essentiellement en forme de cylindre creux présente des bornes de contact (20, 22) tandis que l'autre extrémité est exempte de bornes de contact.

7. Elément chauffant (10, 10') selon la revendication 3, **caractérisé en ce que** la borne de contact au moins au nombre de un est constituée en tant qu'oeillet de contact (24, 26).

8. Elément chauffant (10, 10') selon la revendication 1, **caractérisé en ce que** la surface de section transversale (12a', 12") du fil chauffant (12) est choisie de telle sorte que, dans l'état rappelé, des hélices superposées entrent en prise les unes avec les autres.

9. Procédé de soudage de composants en matière plastique tubulaires, avec les étapes suivantes :
- fourniture d'un élément chauffant (10, 10') selon l'une des revendications 1 à 8 ;
- fourniture d'un premier composant en matière plastique tubulaire (30, 30' ; 66, 66') ;
- fourniture d'un deuxième composant en matière plastique tubulaire (40, 40' ; 64, 64', 64"), la différence entre le rayon intérieur du deuxième composant en matière plastique tubulaire (40, 40' ; 64, 64', 64") et le rayon extérieur du premier composant en matière plastique tubulaire étant, au moins dans une zone à souder (32), plus grande que le diamètre du fil chauffant (12), mais correspondant essentiellement à celui-ci ;
- mouvement destiné à faire glisser le deuxième composant en matière plastique tubulaire (40, 40' ; 64, 64', 64") sur le premier composant en matière plastique tubulaire (30, 30' ; 66, 66') ;
- mouvement destiné à enfiler l'élément chauffant (10, 10') sur le premier composant en matière plastique tubulaire (30, 30' ; 66, 66') ;
- disposition de l'élément chauffant (10, 10') sur la zone à souder (32) ;
- déplacement du premier ou du deuxième composant en matière plastique tubulaire (40, 40' ; 64, 64', 64'') de telle sorte que le deuxième composant en matière plastique tubulaire (40, 40' ; 64, 64', 64'') vient reposer sur l'élément chauffant (10, 10') ;
- alimentation en énergie de l'élément chauffant (10, 10') de telle sorte que le premier composant en matière plastique tubulaire (30, 30' ; 66, 66') et le deuxième composant en matière plastique tubulaire (40, 40' ; 64, 64', 64") sont soudés par le biais de l'élément chauffant (10, 10').

10. Système, composé d'un premier composant en matière plastique tubulaire (30, 30' ; 66, 66'), d'un deuxième composant en matière plastique tubulaire (40, 40' ; 64, 64', 64'') et d'un élément chauffant (10, 10') selon l'une des revendications 1 à 8, la différence entre le rayon intérieur du composant en matière plastique tubulaire (40, 40' ; 64, 64', 64'') et le rayon extérieur du premier composant en matière plastique tubulaire (30, 30' ; 66, 66') étant, au moins dans une zone à souder (32), plus grande que le diamètre du fil chauffant (12), mais correspondant essentiellement à celui-ci.

11. Système selon la revendication 10, **caractérisé en ce que** le premier composant en matière plastique tubulaire (30') présente un élément de positionnement (34) qui définit l'emplacement de l'élément chauffant (10, 10') sur le premier composant en matière plastique tubulaire (30').

12. Système selon la revendication 10, **caractérisé en ce que** le deuxième composant en matière plastique tubulaire (64") présente un indicateur de soudure (70).

13. Système selon la revendication 10 ou 11, **caractérisé en ce que** le deuxième composant en matière plastique tubulaire (64") présente un logement (68) pour la borne de contact ou respectivement pour les bornes de contact (20, 22 ; 24, 26, 28).

14. Système selon la revendication 12 dans la mesure où elle dépend de la revendication 11, **caractérisé en ce que** l'indicateur de soudure (70) est disposé près du logement (68).
